## Europäisches Patentamt

## European Patent Office

## Office européen des brevets

(11) Numéro de publication: **0 229 545**
**B1**

(12) **FASCICULE DE BREVET EUROPEEN**

(45) Date de publication du fascicule du brevet:
**19.07.89**

(51) Int. Cl.⁴: **B60H 1/00**

(21) Numéro de dépôt: **86402608.3**

(22) Date de dépôt: **24.11.86**

(54) **Dispositif de commande en déplacement d'un organe mobile, tel qu'un volet dans une installation de chauffage et de ventilation ou de climatisation pour véhicule automobile.**

(30) Priorité: **13.12.85 FR 8518542**

(43) Date de publication de la demande:
**22.07.87 Bulletin 87/30**

(45) Mention de la délivrance du brevet:
**19.07.89 Bulletin 89/29**

(84) Etats contractants désignés:
**DE ES FR IT**

(56) Documents cités:
**EP-A- 0 053 462**
**DE-A- 2 403 316**
**FR-A- 2 536 124**
**FR-A- 2 553 858**
**GB-A- 2 064 825**

**PATENTS ABSTRACTS OF JAPAN,**
**vol. 8, no. 284 (M-348)[1721], 26 décembre 1984; &**
**JP-A-59 153 609 (SHIRAKI KINZOKU KOGYO**
**K.K.) 01-09-1984**
**PATENTS ABSTRACTS OF JAPAN,**
**vol. 8, no. 216 (M-329)[1653], 3 octobre 1984; &**
**JP-A-59 100 009 (NIPPON DENSO K.K.) 09-06-1984**

(73) Titulaire: **VALEO, 64, avenue de la Grande Armée,**
**F-75848 Paris Cédex 17(FR)**

(72) Inventeur: **Bouvot, Jean-Francois, 2, rue des Grands**
**Pres Le Mesnil Sevin, F-78720 Dampierre(FR)**

(74) Mandataire: **Netter, André et al, Cabinet NETTER 40, rue**
**Vignon, F-75009 Paris(FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

ACTORUM AG

## Description

L'invention concerne un dispositif de commande en déplacement d'un organe mobile,tel qu'un volet dans une installation de chauffage et de ventilation ou de climatisation pour véhicule automobile.

Dans la technique antérieure, un tel volet était en général déplacé par une tringlerie à leviers et à câble à partir d'un moyen de commande prévu sur le tableau de bord du véhicule. Il en résultait souvent une dureté de manoeuvre du volet.

On a donc déjà proposé (FR-A 2 536 124) de déplacer un tel volet au moyen d'un vérin simple effet dont la tige de piston est reliée au volet à déplacer, et d'un distributeur de fluide qui est actionné par le moyen de commande prévu sur un tableau de bord de véhicule et qui est relié, d'une part, à l'orifice d'alimentation du vérin et,d'autre part, à une source de fluide sous pression et à un échappement. Dans le cas d'un véhicule automobile, la source de fluide sous pression est en général de l'air en dépression, c'est-à-dire à une pression inférieure à la pression atmosphérique, qui est prélevé sur le collecteur d'alimentation du moteur à combustion interne du véhicule, et l'échappement est constitué par une simple mise à l'air libre. Il en résulte, de façon générale, une grande douceur de manoeuvre, une constance de l'effort appliqué par l'utilisateur au moyen de commande, et le retour automatique du volet dans une position privilégiée de sécuruté en cas de panne ou de défaut de la source de fluide sous pression.

Le distributeur de fluide utilisé comprend en général un premier élément mobile qui est entraîné en déplacement par le moyen de commande prévu au tableau de bord, et un deuxième élément mobile qui est relié par des moyens de transmission de mouvement au volet à déplacer, les deux éléments mobiles du distributeur définissant entre eux des chambres de fluide qui sont sélectivement reliées, d'une part,à la source de fluide sous pression ou à l'échappement par des conduits portés par le premier élément mobile et, d'autre part, à l'orifice d'alimentation du vérin par un conduit porté par le deuxième élément mobile.

Pour réduire l'effort de manoeuvre que l'utilisateur doit appliquer au moyen de commande, on a déjà proposé de monter le distributeur de fluide sur le tableau de bord, de façon à ce que son premier élément mobile puisse être rendu solidaire du moyen de commande et donc entraîné directement par l'utilisateur. Le vérin se trouve en général au voisinage du volet à déplacer, sa tige de piston étant reliée directement à ce volet ou à un arbre portant le volet. Dans ce cas, la longueur de la liaison de fluide entre le distributeur et le vérin est en général assez importante, et les moyens de transmission de mouvement entre le volet et le deuxième élément mobile du distributeur ont également une longueur importante,de sorte que la boucle de liaison entre le distributeur de fluide, le vérin et le volet est longue, ce qui nuit à la rapidité et à la précision de la commande.

Un des buts de l'invention est d'éviter cet inconvénient.

Un autre but de l'invention est de proposer un dispositif de commande en déplacement d'un organe mobile, tel qu'un volet, qui soit particulièrement compact et qui puisse être standardisé, l'adaptation entre ce dispositif standard et un volet particulier étant réalisée par une simple adaptation des moyens de transmission de mouvement entre ce dispositif et le volet.

Un autre but de l'invention est de proposer un tel dispositif de commande, qui présente en outre l'avantage d'avoir des liaisons de fluide fixes avec la source de fluide sous pression et avec le vérin.

Par rapport au FR-A 2 536 124 qui décrit déjà un système de commande en déplacement d'un organe mobile, tel qu'un volet dans une installation de chauffage et de ventilation ou de climatisation pour véhicule automobile,comprenant un vérin simple effet dont la tige de piston est reliée à l'organe mobile par des moyens de transmission de mouvement, un distributeur de fluide relié à un orifice d'alimentation du vérin, à une source de fluide sous pression et à un échappement, et un moyen de commande du distributeur pour alimenter le vérin en fluide sous pression, le mettre à l'échappement ou l'isoler de la source de fluide et de l'échappement, le distributeur et le moyen de commande étant montés sur le tableau de bord du véhicule, le distributeur comprenant un élément mobile relié à l'organe mobile par des moyens de transmission de mouvement de façon à suivre le déplacement de l'organe mobile, l'invention est caractérisée en ce que le vérin est monté également sur le tableau de bord ou au voisinage immédiat de celui-ci et en ce que le distributeur, le vérin et le moyen de commande forment un ensemble compact dans lequel la longueur de la liaison de fluide entre le distributeur et le vérin est réduite à un minimum et est fixa, la tige de piston du vérin étant reliée avec l'élément mobile du distributeur à l'organe mobile à déplacer par les mêmes moyens de transmission de mouvement.

Ainsi, selon l'invention, le dispositif de commande peut être monté sur le tableau de bord d'un véhicule, et est relié à l'organe mobile à déplacer par des moyens classiques de transmission de mouvement.

Dans ce dispositif, la boucle de liaison entre le distributeur, le vérin et l'organe mobile est remplacée par une boucle de liaison entre le distributeur et le vérin, qui peut avoir une longueur très courte.

Selon une autre caractéristique de l'invention, la liaison de fluide entre le distributeur et le vérin est fixe.

Dans ce cas, le distributeur de fluide comprend un élément fixe coopérant avec l'élément mobile précité et relié à l'orifice d'alimentation du vérin par un conduit formant ladite liaison fixe de fluide.

On évite ainsi que ce conduit se déplace en suivant les mouvements de l'élément mobile du distributeur auquel il était auparavant relié, dans la technique antérieure.

Selon une réalisation particulière de l'invention, l'élément fixe et l'élément mobile du distributeur déterminent entre eux des chambres séparées de façon étanche, dont l'une est reliée en permanence à l'orifice d'alimentation du vérin et dont les autres sont propres à être reliées à la source de fluide et à l'échappement, et à en être isolées, l'élément mobile du distributeur comprenant un passage de fluide dont une extrémité débouche dans la chambre reliée au vérin et dont l'autre extrémité débouche dans une des autres chambres, en fonction de la position de l'organe mobile.

Dans la description qui suit, faite à titre d'exemple, on se réfère aux dessins annexés, dans lesquels :

- la figure 1 représente schématiquement un dispositif connu de commande en déplacement d'un volet au moyen d'un vérin simple effet et d'un distributeur de fluide;
- la figure 2 est une vue correspondante à la figure 1, mais représentant un dispositif de commande selon l'invention;
- la figure 3 représente schématiquement un autre dispositif de commande selon l'invention;
- la figure 4 est une vue en coupe selon la ligne IV-IV d'une partie du dispositif de la figure 3;
- la figure 5 est une vue correspondant à la figure 4, pour une variante de réalisation.

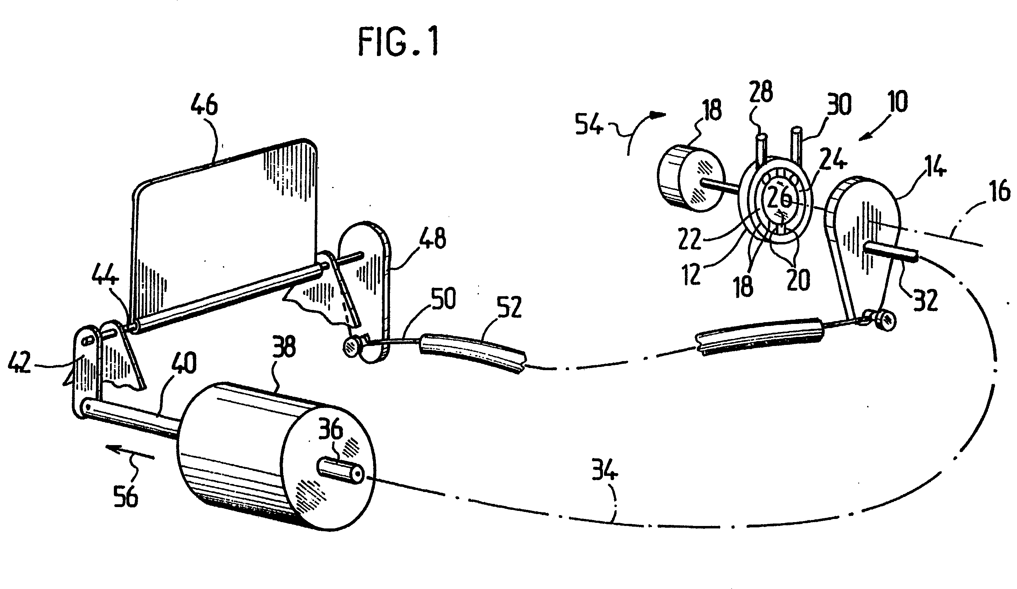

On se réfère d'abord à la figure 1, qui représente schématiquement un dispositif connu de la technique antérieure, utilisé par exemple pour la commande en déplacement d'un volet faisant partie d'une installation de chauffage et de ventilation ou de climatisation d'un véhicule automobile.

Ce dispositif comprend un distributeur de fluide 10, monté sur le tableau de bord d'un véhicule et constitué par deux éléments mobiles 12 et 14 qui, dans cet exemple, ont sensiblement la forme de disques montés à rotation autour d'un axe commun 16.

L'élément mobile 12 du distributeur est solidaire d'un moyen de commande 18, par exemple un bouton mobile en rotation autour de l'axe 16, et qu'un utilisateur va tourner à la main. Les deux éléments 12, 14 du distributeur sont maintenus appliqués l'un sur l'autre, pour délimiter entre eux des chambres de fluide. Pour cela, une garniture de caoutchouc ou de matière analogue recouvre par exemple la face de l'élément 12 qui est tournée vers l'élément 14, cette garniture comprenant deux nervures circulaires concentriques 19 et des nervures radiales 20 s'étendant entre les nervures circulaires 18, pour délimiter entre elles deux chambres 22, 24 sensiblement semi-annulaires, c'est-à-dire s'étendant sur un peu moins de 180°, qui sont séparées l'une de l'autre par une petite chambre intermédiaire 26.

L'élément mobile 12 du distributeur comprend un conduit ou embout 28, dont une extrémité est destinée à être reliée à une source de fluide sous pression, et dont l'autre extrémité débouche dans la chambre 22, et un autre embout ou conduit 30, dont une extrémité débouche à l'air libre ou est destinée à être reliée à un échappement, et dont l'autre extrémité débouche dans la chambre 24.

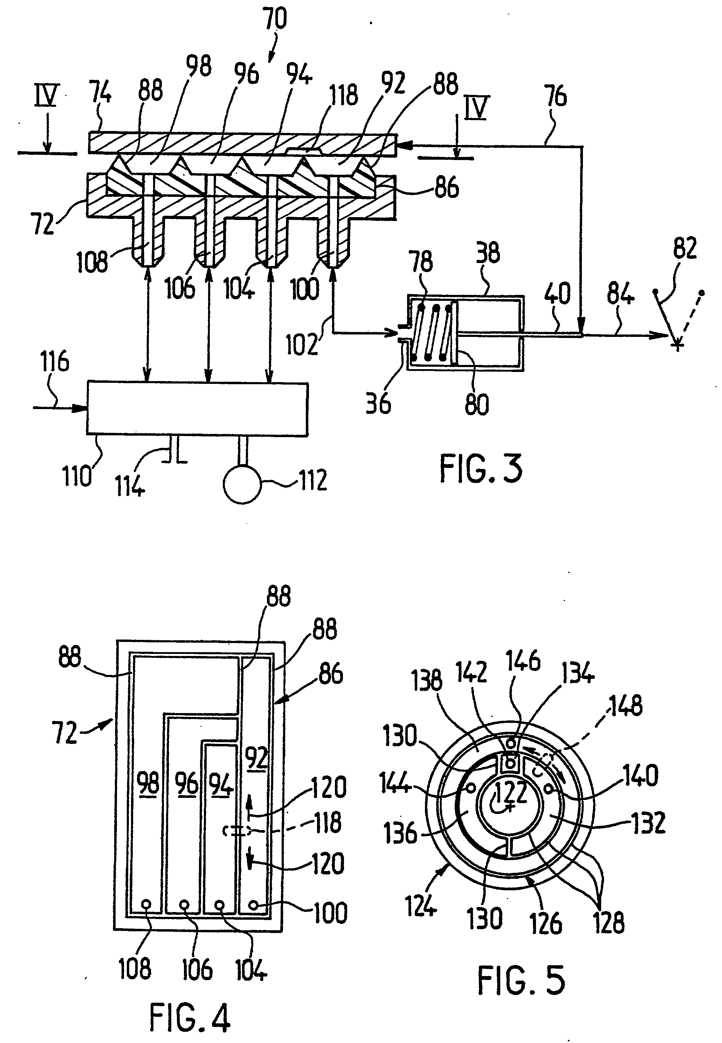

L'autre élément mobile 14 du distributeur comprend un passage de fluide formé par un embout 32, dont une extrémité débouche, sur la face de l'élément 14 tournée vers l'élément 12, entre les deux nervures concentriques 19 de cet élément 12, c'est-à-dire dans la chambre 22, dans la chambre 24 ou dans la chambre 26, et dont l'autre extrémité est reliée par un tuyau souple 34 à l'orifice d'alimentation 36 d'un vérin simple effet 38, qui est par exemple du type représenté en figure 3. La tige de piston 40 de ce vérin est reliée par une biellette 42 à un arbre 44 solidaire du volet 46 à déplacer. Des moyens de transmission de mouvement, comprenant par exemple une biellette 48 et un câble 50 guidé dans une gaine fixe 52, relient l'arbre 44 du volet 46 à l'élément mobile 14 du distributeur.

Ce dispositif connu fonctionne de la façon suivante :

Lorsque l'extrémité de l'embout 32 de l'élément 14 débouche dans la chambre 26, qui est isolée de la source de fluide sous pression et de l'échappement, le vérin 38 n'est ni alimenté en fluide sous pression, ni mis à l'échappement, et le volet 46 reste donc immobile.

Si l'utilisateur tourne le bouton de commande 18 dans le sens indiqué par la flèche 54, l'extrémité de l'embout 32 de l'élément 14 va déboucher dans la chambre 24 reliée à l'échappement. Le vérin 38 va donc être mis à l'échappement, sa tige de piston 40 va se déplacer dans le sens de la flèche 56, et le volet 46 va être entraîné en rotation dans le sens correspondant. Cette rotation est transmise par la biellette 48 et le câble 50 à l'élément mobile 14 du distributeur, qui tourne autour de l'axe 16 dans le sens de la flèche 54, jusqu'à ce que l'extrémité de l'embout 32 débouche à nouveau dans la chambre intermédiaire 26. Le vérin 38 étant alors isolé de la source de fluide sous pression et de l'échappement, le mouvement du volet 46 et le mouvement de l'élément mobile 14 du distributeur s'arrêtent.

Inversement, si l'utilisateur fait tourner le bouton de commande 18 dans le sens opposé à celui qui est indiqué par la flèche 54, l'extrémité de l'embout 32 va déboucher dans la chambre 22, le vérin va être alimenté en fluide sous pression, sa tige de piston va se déplacer dans le sens opposé à celui de la flèche 56, le volet 46 va tourner dans le sens correspondant et l'élément 14 du distributeur va tourner dans le même sens, jusqu'à ce que l'extrémité de l'embout 32 débouche à nouveau dans la chambre intermédiaire 26 et que son mouvement s'arrête.

On a donc ici un dispositif de commande du type suiveur, le déplacement angulaire du volet 46 étant proportionnel au déplacement angulaire du bouton de commande 18.

On constate cependant que la boucle de transmission qui est associée au distributeur 10 est constituée par le tuyau 34 de liaison du distributeur au vérin, par la tringlerie associée au volet 46 et par les moyens 48, 50 de transmission de mouvement entre le volet 46 et le deuxième élément mobile 14 du distributeur. Cette boucle a donc une grande longueur lorsque le distributeur 10 se trouve sur le tableau de bord du véhicule, ce qui nuit à la rapidité et à la précision de la commande.

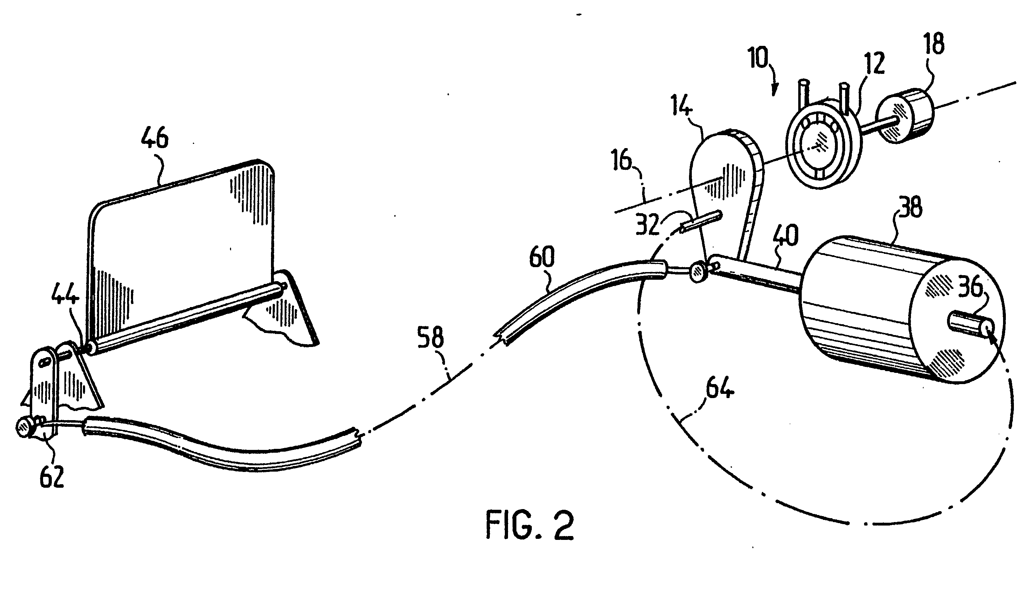

On se réfère maintenant à la figure 2, représentant un dispositif de commande selon l'invention, permettant précisément d'éviter cet inconvénient.

Pour faciliter la comparaison entre l'invention et la technique antérieure, on utilisera en figure 2 les mêmes chiffres de référence qu'en figure 1 pour désigner des éléments identiques.

Le dispositif de commande représenté en figure 2 comprend donc, comme celui de la figure 1, un distributeur 10 formé de deux éléments mobiles 12 et 14 montés à rotation autour d'un axe commun 16, l'élément 12 étant solidaire du bouton de commande 18.

Ce dispositif diffère de celui de la figure 1 en ce que le vérin 38 est monté au voisinage immédiat du distributeur 10, donc du tableau de bord du véhicule, sa tige de piston 40 étant articulée sur l'élément mobile 14 du distributeur autour d'un axe parallèle à l'axe de rotation 16. L'ensemble formé par la tige de piston 40 du vérin 38 et par l'élément 14 du distributeur de fluide est relié à l'arbre 44 du volet 46 par des moyens de transmission de mouvement qui sont ici constitués par un câble 58 guidé dans une gaine fixe 60 et par une biellette 62. L'embout 32 de l'élément mobile 14 du distributeur est relié à l'orifice 36 d'alimentation du vérin par un tuyau 64 qui peut avoir une longueur très faible, en raison de la proximité du distributeur et du vérin.

Ce dispositif selon l'invention fonctionne comme le dispositif de la figure 1, mais on voit que la boucle de transmission entre le distributeur et le vérin est constituée uniquement par le tuyau souple 64 et la tige de piston 40, et a donc une longueur faible, ce qui améliore la rapidité et la précision de la commande.

En outre, le dispositif selon l'invention peut être standardisé. Pour l'adapter à une installation particulière de chauffage et de ventilation ou de climatisation, il suffit de prévoir un rapport de transmission voulu entre la tige de piston 40 du vérin et l'arbre 44 du volet 46, par exemple au moyen d'une biellette 62 de longueur appropriée.

On se réfère maintenant aux figures 3 et 4, représentant une autre forme de réalisation d'un dispositif de commande selon l'invention.

Comme on l'a déjà indiqué, le dispositif de la figure 2 est du type suiveur,le volet 46 ayant un déplacement proportionnel à celui du bouton de commande 18. Le dispositif de la figure 3 permet quant à lui la commande du déplacement pas à pas du volet qui est donc amené dans des positions prédéterminées dont le nombre est déterminé par la structure même du distributeur. Le moyen de commande de ce distributeur (curseur ou bouton rotatif) peut être déplacé dans un nombre prédéterminé de positions, qui sont par exemple équidistantes et auxquelles correspondent des positions prédéterminées du volet qui ne sont pas forcément équidistantes, de sorte que le mouvement du volet est ainsi dissocié du mouvement du moyen de commande.

Le distributeur 70 de la figure 3 comprend un élément fixe 72 qui est ici un plateau de forme sensiblement rectangulaire et qui est associé à un élément mobile 74 propre à suivre les déplacements de la tige de piston 40 du vérin 38, en étant déplacé directement par cette tige de piston ou par l'intermédiaire de moyens de transmission de mouvement représentés schématiquement en 76 sur la figure 3.

Comme on le voit sur cette figure, le vérin 38 est un vérin simple effet, comprenant un ressort de compression 78 entre son piston 80 et son extrémité comportant l'orifice d'alimentation 36. Lorsque ce vérin est alimenté en dépression, le piston 80 comprime le ressort 78 et la tige de piston 40 rentre à l'intérieur du vérin 38 tandis que, quand le vérin est mis à l'échappement, le ressort 78 se détend et la tige de piston 40 sort du vérin.

La tige de piston 40 est également reliée au volet 82 à déplacer par des moyens 84 de transmission de mouvement qui sont par exemple du même type que ceux représentés en figure 2.

Sur sa face tournée vers l'élément mobile 74, l'élément fixe 72 comprend une garniture 86 de caoutchouc ou de matière analogue, dont la vue en plan est représentée à plus petite échelle en figure 4, comportant des nervures en saillie 88 appliquées à étanchéité sur l'élément mobile 74 et délimitant entre elles quatre chambres 92, 94, 96 et 98 dans chacune desquelles débouche un conduit formant passage de fluide. Le conduit 100 débouchant dans la chambre 92 est relié à l'orifice 36 d'alimentation du vérin 38 par un conduit ou tuyau souple 102 qui peut avoir une longueur très faible et qui est fixe. Les conduits 104,106 et 108 débouchant dans les chambres 94, 96 et 98 respectivement, sont reliés à trois sorties d'un distributeur de fluide 110 de type classique, par exemple un distributeur à tiroir, à deux entrées reliées à la source 112 de fluide sous pression (c'est-à-dire d'air en dépression dans le cas d'un véhicule automobile) et à un échappement 114. Ce distributeur 110 de type classique comprend un élément mobile, non représenté, sur lequel agit directement le moyen de commande 116 prévu au tableau de bord, et qui permet de relier sélectivement chaque conduit 104, 106, 108 à la source de fluide sous pression 112 ou à l'échappement 114, ou d'isoler de façon étanche ce conduit de la source 112 et de l'échappement 114.

La chambre 92 reliée par le conduit 100 et le tuyau fixe 102 à l'orifice d'alimentation du vérin 38 est rectiligne et s'étend sur toute la longueur de la garniture 86. La chambre 94, voisine de la chambre 92, s'étend sur une partie seulement de la longueur de la garniture 86. Les deux autres chambres 96 et 98 ont sensiblement la forme d'un L, ces deux L étant emboîtés l'un dans l'autre et sur le coin de la chambre 94, de sorte que les petites branches de ces L s'étendent jusqu'à la chambre 92 en étant séparées de celle-ci par une nervure 88 de la garniture 86.

L'élément mobile 74 est une plaque plane à contour rectangulaire dont la face tournée vers l'élément fixe 78 comprend une rainure 118 formée à cheval sur la nervure 88 rectiligne qui sépare la chambre 92 des autres chambres 94, 96, 98. L'élément mobile 74 est déplacé par la tige de piston 40 et les moyens de transmission 76 en translation rectiligne par rapport à l'élément fixe 72, dans les directions indiquées par les flèches 120. Ainsi, selon la position de l'élément mobile 74 par rapport à l'élément fixe 72, la rainure 118 met la chambre 92 en communication avec la chambre 94, ou avec la chambre 96, ou avec la chambre 98, d'où il résulte que l'orifice 36 d'alimentation du vérin 38 est relié avec le conduit 104, ou avec le conduit 106, ou avec le conduit 108.

Ce dispositif fonctionne de la façon suivante :

On suppose, au départ, que l'élément mobile 74 du distributeur est dans une position telle par rapport à l'élément fixe 72 que sa rainure 118 fait communiquer les chambres 92 et 94, comme représenté en

4

figure 4. Lorsque, par l'intermédiaire du distributeur 110, la chambre 94 est reliée à la source 112 de fluide sous pression, le vérin 38 est alimenté en air à une pression inférieure à la pression atmosphérique, la tige de piston 40 rentre à l'intérieur du vérin 38 et le volet 82 tourne dans le sens contraire des aiguilles d'une montre en figure 3, jusqu'à venir en butée. A cette position limite du volet correspond une position limite de l'élément mobile 74 du distributeur, pour laquelle la rainure 118 se trouve par exemple au voisinage de l'extrémité de la garniture 86 comprenant les débouchés des conduits 100 et 104.

Si, ensuite, par action du moyen de commande 116, le conduit 104 est relié à l'échappement et le conduit 106 est isolé de la source 112 et de l'échappement 114, le vérin 38 est relié à l'echappement, la tige de piston 40 va sortir du vérin 38, et le volet 82 va pivoter dans le sens des aiguilles d'une montre à partir de sa position limite. Le mouvement de la tige de piston 40 est transmis à l'élément mobile 74 du distributeur, dont la rainure 118 va se déplacer vers l'extrémité opposée de la garniture 86, jusqu'au moment où elle va mettre la chambre 92 en communication avec la chambre 96. Le vérin 38 est alors isolé de la source de fluide sous pression et de l'échappement, le mouvement de la tige de piston 40 s'arrête et le volet 82 est maintenu dans une position intermédiaire.

Si, ensuite, par action du moyen de commande 116, le conduit 106 est relié à l'échappement, le vérin 38 va à nouveau être mis à l'échappement, la tige de piston 40 va poursuivre son mouvement de sortie à l'extérieur du vérin 38 et le volet 82 va reprendre sa rotation dans le sens des aiguilles d'une montre jusqu'à venir par exemple dans une position limite opposée à la première position limite citée. A cette seconde position limite correspond une position de l'élément mobile 74 du distributeur qui est telle que sa rainure 118 met alors en communication la chambre 92 et la chambre 98. Si cette chambre 98 est reliée par son conduit 108 et le distributeur 110 à l'échappement 114, le volet 82 sera maintenu dans sa seconde position limite. De même, si la chambre 98 est isolée, par le distributeur 110, de l'échappement et de la source 112, le volet 82 s'arrêtera dès que la rainure 118 de l'élément mobile 74 aura pénétré dans la chambre 98. Par contre, si cette chambre 98 est reliée par le distributeur 110 à la source 112 de fluide sous pression, le vérin 38 sera alimenté en dépresion, et le volet 82 tournera dans le sens contraire des aiguilles d'une montre en figure 3 pour venir dans sa position intermédiaire si la chambre 96 est isolée de l'échappement et de la source 112, ou bien dans sa première position limite si la chambre 96 et la chambre 94 sont toutes les deux reliées à la source 112 de fluide sous pression.

On comprend que, avec le distributeur représenté dans les figures 3 et 4, le déplacement du volet 82 n'est pas proportionnel au déplacement du moyen de commande 116, mais est défini par la façon dont les chambres 94, 96 et 98 sont agencées les unes par rapport aux autres.

Par ailleurs, ce dispositif peut être particulièrement compact et présente en outre l'avantage que les tuyaux de liaison entre le distributeur, le vérin et la source de fluide sont fixes. Le déplacement de l'élément mobile du distributeur ne provoque donc plus de déplacement de ces tuyaux de liaison, ce qui peut se révéler particulièrement intéressant dans le compartiment moteur d'un véhicule automobile, où l'espace libre est en général assez limité.

La figure 5 représente une variante de réalisation du distributeur des figures 3 et 4, dans laquelle les deux éléments du distributeur sont des disques, comme dans le cas de la figure 2, dont l'un est mobile en rotation autour de l'axe 122 commun à ces disques.

Dans ce cas, l'élément fixe 124 du distributeur porte une garniture 126 de caoutchouc ou de matière analogue, qui est à contour circulaire et qui comprend trois nervures circulaires concentriques 128 et des nervures radiales 130 qui s'étendent entre les deux nervures circulaires 128 radialement les plus internes de façon à définir, entre ces deux nervures 128, trois chambres 132, 134 et 136 séparées l'une de l'autre par une nervure radiale 130. Les deux nervures circulaires 128 qui sont radialement les plus externes définissent entre elles une chambre annulaire continue 138.

L'élément fixe 124 du distributeur et sa garniture 126 sont traversés par des conduits de fluide 140, 142, 144, 146 qui débouchent respectivement dans les chambres 132, 134, 136 et 138, les trois premiers conduits étant reliés aux trois sorties d'un distributeur de fluide, tel que le distributeur 110 de la figure 3, qui est actionné par un moyen de commande 116 et dont les deux entrées sont reliées à la source de fluide sous pression 112 et à l'échappement 114, tandis que le conduit 146 est relié à l'orifice d'alimentation du vérin.

L'élément mobile du distributeur, non représenté sur le dessin, est un disque plan appliqué sur la garniture 126 de l'élément fixe 124 et comprenant un rainure 148 qui se trouve à cheval sur la nervure circulaire 128 intermédiaire de la garniture 126 et qui, en fonction de la position angulaire de l'élément mobile par rapport à l'élément fixe 124, fait communiquer la chambre 138 soit avec la chambre 132, soit avec la chambre 134, soit avec la chambre 136. Comme dans le mode de réalisation précédent, l'élément mobile est déplacé par la tige de piston 40 du vérin 38, par l'intermédiaire de moyens de transmission de mouvement qui transforment le mouvement rectiligne de la tige de piston 40 en mouvement de rotation de l'élément mobile du distributeur autour de l'axe 122.

Le fonctionnement de cette variante de réalisation est identique à celui du dispositif des figures 3 et 4.

**Revendications**

1. Dispositif de commande en déplacement d'un organe mobile, tel qu'un volet (46, 82) dans une installation de chauffage et de ventilation ou de climatisation pour véhicule automobile, comprenant un vérin simple effet (38) dont la tige de piston (40) est reliée à l'organe mobile par des moyens (58, 62, 84) de transmission de mouvement, un distributeur de fluide (10, 70) relié à un orifice (36) d'alimentation du vérin (38), à une source (112) de fluide sous pression et à un échappement (114), et un moyen (18, 116) de commande du distributeur pour alimenter le vérin (38) en fluide sous pression, le mettre à l'échappement ou l'isoler de la source de fluide et de l'échappement, le distributeur (10, 70) et le moyen de commande (18, 116) étant montés sur le tableau de bord du véhicule automobile, le distributeur comprenant un élément mobile (14, 74) relié à l'organe mobile (46, 82) par des moyens de transmission de mouvement de façon à suivre le déplacement de l'organe mobile, caractérisé en ce que le vérin (38) est monté également sur le tableau de bord ou au voisinage immédiat de celui-ci et en ce que le distributeur (10, 70), le vérin (38) et le moyen de commande (18, 116) forment un ensemble compact dans lequel la longueur de liaison de fluide (64, 102) entre le distributeur et le vérin est réduite à un minimum et est fixe, la tige de piston (40) du vérin étant reliée avec l'élément mobile (14, 74) du distributeur à l'organe mobile (46, 82) par les mêmes moyens (58, 60, 62, 84) de transmission de mouvement.

2. Dispositif selon la revendication 1, caractérisé en ce que le distributeur (10) comprend un autre élément mobile (12), solidaire du moyen de commande (18) pour être déplacé par celui-ci par rapport au premier élément mobile (14) cité qui est relié au vérin (38) par la liaison de fluide (64) précitée.

3. Dispositif selon la revendication 2, caractérisé en ce que l'autre élément mobile (12) du distributeur (10) est relié à la source de fluide sous pression et à l'échappement.

4. Dispositif selon la revendication 1, caractérisé en ce que le distributeur (70) comprend un élément fixe (72, 124) coopérant avec l'élément mobile précité (74) et relié à l'orifice (36) d'alimentation du vérin par ladite liaison fixe (102) de fluide.

5. Dispositif selon la revendication 4, caractérisé en ce que l'élément fixe (72, 124) du distributeur est relié à la source de fluide (112) et à l'échappement (114) par un distributeur supplémentaire (110), actionné par un moyen de commande (116).

6. Dispositif selon la revendication 4 ou 5, caractérisé en ce que les liaisons de fluide entre l'élément fixe (72, 124) du distributeur et la source de fluide sous pression (112) et l'échappement (114) sont fixes.

7. Dispositif selon l'une des revendications 4 à 6, caractérisé en ce que l'élément fixe (72, 124) et l'élément mobile (74) du distributeur déterminent entre eux des chambres (92, 94, 96, 98; 132, 134, 136, 138) dont l'une (92, 138) est reliée en permanence à l'orifice d'alimentation (36) du vérin, et dont les autres sont propres à être reliées à la source de fluide (112), à l'échappement (114) et à en être isolées, l'élément mobile (74) du distributeur comprenant un passage de fluide (118) dont une extrémité débouche dans la chambre (92) reliée au vérin et dont l'autre extrémité débouche dans l'une des autres chambres, en fonction de la position de l'organe mobile.

8. Dispositif selon la revendication 7, caractérisé en ce que la chambre (92) reliée en permanence à l'orifice d'alimentation (36) du vérin est rectiligne et s'étend sur toute la longueur de la garniture (86) de l'élément fixe (72).

9. Dispositif selon la revendication 8, caractérisé en ce que les autres chambres (94, 96, 98) comprennent une chambre (94) voisine de la chambre (92) et s'étendent sur une partie seulement de la longueur de la garniture (86) et deux autres chambres (96, 98) ayant sensiblement la forme d'un L, ces deux L étant emboîtés l'un dans l'autre et sur le coin de la chambre (94), de sorte que les petites branches de ces L s'étendent jusqu'à la chambre (92) en étant séparées de celle-ci par une nervure (88) de la garniture (86).

10. Dispositif selon la revendication 7, caractérisé en ce que la chambre (138) reliée en permanence à l'orifice d'alimentation (36) du vérin est une chambre annulaire continue définie entre deux nervures circulaires concentriques (128) d'une garniture (126) de l'élément fixe (124).

11. Dispositif selon la revendication 10, caractérisé en ce que les autres chambres (132, 134, 136) sont définies par deux nervures circulaires concentriques (128) et séparées l'une de l'autre par une nervure radiale (130).

12. Dispositif selon l'une des revendications 7 à 11, caractérisé en ce que l'élément mobile (74) du distributeur comprend une rainure (118; 148) formée à cheval sur une nervure (88, 128) de l'élément fixe (72; 124) qui sépare la chambre (92; 138), reliée en permanence à l'orifice d'alimentation (36) du vérin, des autres chambres (94, 96, 98; 132, 134, 136) en sorte que, en fonction de la position de l'élément mobile par rapport à l'élément fixe, la rainure (118; 148) met la chambre (92; 138) en communication avec la chambre (94; 132), ou avec la chambre (96; 134) ou avec la chambre (98; 136).

**Patentansprüche**

1. Betätigungsvorrichtung zur Verstellung eines beweglichen Organs wie einer Klappe (46, 82) in einer Heizungs- und Lüftungs- oder Klimaanlage in Kraftfahrzeugen, bestehend aus einem einfachwirkenden Zylinder (38), dessen Kolbenstange (40) mit dem beweglichen Organ durch Elemente (58, 62, 84) zur Übertragung der Bewegung verbunden ist, einem Verteiler (10, 70) für das Medium, der mit einer Öffnung (36) zur Versorgung des Zylinders (38), mit einer Quelle (112) eines Druckmediums und mit einem Auslaß (114) verbunden ist, sowie einer Vorrichtung (18, 116) zur Betätigung des Verteilers, um den Zylinder (38) mit Druckmedium zu versorgen, ihn zum Auslaß hin zu öffnen oder von der Quelle des Mediums oder dem Auslaß zu trennen, wobei der Verteiler (10, 70) und die Betätigungsvorrichtung (18, 116) an der Instrumententafel des Kraftfahrzeuges angebracht sind, während der Verteiler ein bewegliches Element (14, 74) enthält, welches über Vorrichtungen zur Übertragung der Bewegung in der Weise mit dem beweglichen Organ (46, 82) verbunden ist, daß es der Verschiebung des beweglichen Organs folgt, dadurch gekennzeichnet, daß der Zylinder (38) ebenfalls an der Instrumententafel oder in deren unmittelbarer Nähe angebracht ist und daß der Verteiler (10, 70), der Zylinder (38) und die Betätigungsvorrichtung (18, 116) eine kompakte Einheit bilden, bei der die Länge der Verbindung (64, 102) für das Medium zwischen dem Verteiler und dem Zylinder auf ein Minimum reduziert und unveränderlich ist, während die Kolbenstange (40) des Zylinders durch die gleichen Vorrichtungen (58, 60, 62, 84) zur Übertragung der Bewegung mit dem beweglichen Element (14, 74) des Verteilers zum beweglichen Organ (46, 82) verbunden ist.

2. Vorrichtung gemäß Anspruch 1, dadurch gekennzeichnet, daß der Verteiler (10) ein weiteres bewegliches Element (12) enthält, welches fest mit der Betätigungsvorrichtung (18) verbunden ist, um von dieser im Verhältnis zum erwähnten ersten beweglichen Element verstellt zu werden, welches durch die vorgenannte Verbindung (64) für das Medium mit dem Zylinder (38) verbunden ist.

3. Vorrichtung gemäß Anspruch 2, dadurch gekennzeichnet, daß das andere bewegliche Element (12) des Verteilers (10) mit der Quelle des Druckmediums und dem Auslaß verbunden ist.

4. Vorrichtung gemäß Anspruch 1, dadurch gekennzeichnet, daß der Verteiler (70) ein feststehendes Element (72, 124) enthält, welches mit dem vorgenannten beweglichen Element (74) zusammenwirkt und durch die genannte feste Verbindung (102) für das Medium mit der Öffnung (36) zur Versorgung des Zylinders verbunden ist.

5. Vorrichtung gemäß Anspruch 4, dadurch gekennzeichnet, daß das feststehende Element (72, 124) des Verteilers durch einen zusätzlichen Verteiler (110), der durch ein Betätigungselement (116) betätigt wird, mit der Quelle des Mediums (112) und dem Auslaß (114) verbunden ist.

6. Vorrichtung gemäß Anspruch 4 oder 5, dadurch gekennzeichnet, daß die Verbindungen für das Medium zwischen dem feststehenden Element (72, 124) des Verteilers und der Quelle des Druckmediums (112) und dem Auslaß (114) feststehend ausgeführt sind.

7. Vorrichtung gemäß einem der Ansprüche 4 bis 6, dadurch gekennzeichnet, daß das feststehende Element (72, 124) und das bewegliche Element (74) des Verteilers dazwischenliegende Kammern (92, 94, 96, 98; 132, 134, 136, 138) begrenzen, von denen eine (92, 138) ständig mit der Öffnung (36) zur Versorgung des Zylinders verbunden ist und von denen die anderen dazu geeignet sind, mit der Quelle (112) des Mediums, dem Auslaß (114) verbunden bzw. von diesen getrennt zu werden, wobei das bewegliche Element (74) des Verteilers einen Durchtritt (118) für das Medium enthält, dessen eines Ende in die mit dem Zylinder verbundene Kammer (92) mündet und dessen anderes Ende je nach Stellung des beweglichen Organs in eine der anderen Kammern mündet.

8. Vorrichtung gemäß Anspruch 7, dadurch gekennzeichnet, daß die ständig mit der Öffnung (36) zur Versorgung des Zylinders verbundene Kammer (92) geradlinig ausgeführt ist und sich über die gesamte Länge der Dichtung (86) des feststehenden Elementes (72) erstreckt.

9. Vorrichtung gemäß Anspruch 8, dadurch gekennzeichnet, daß die anderen Kammern (94, 96, 98) eine in Nähe der Kammer (92) gelegene Kammer (94) einschließen, die sich nur über einen Teil der Länge der Dichtung (86) erstreckt, und zwei weitere Kammern (96, 98), die im wesentlichen L-förmig sind, wobei diese L-Stücke miteinander und mit der Ecke der Kammer (94) in der Weise verschachtelt sind, daß sich die kurzen Schenkel dieser L-Stücke bis zur Kammer (92) erstrecken und von dieser durch eine Rippe (88) der Dichtung (86) getrennt sind.

10. Vorrichtung gemäß Anspruch 7, dadurch gekennzeichnet, daß die ständig mit der Öffnung (36) zur Versorgung des Zylinders verbundene Kammer (138) eine durchgehende ringförmige Kammer ist, die von zwei konzentrischen ringförmigen Rippen (128) einer Dichtung (126) des feststehenden Elements (124) begrenzt wird.

11. Vorrichtung gemäß Anspruch 10, dadurch gekennzeichnet, daß die anderen Kammern (132, 134, 136) von zwei konzentrischen ringförmigen Rippen (128) begrenzt werden und voneinander durch eine radiale Rippe (130) getrennt sind.

12. Vorrichtung gemäß einem der Ansprüche 7 bis 11, dadurch gekennzeichnet, daß das bewegliche Element (74) des Verteilers eine Nut (118; 148) aufweist, die auf einer Rippe (88, 128) des feststehenden Elements (72; 124) ausgebildet ist, wodurch die fest mit der Öffnung (36) zur Versorgung des Zylinders verbundene Kammer (92; 138) von den anderen Kammern (94, 96, 98; 132, 134, 136) in der Weise getrennt ist, daß die Nut (118; 148) je nach Stellung des beweglichen Elements im Verhältnis zum feststehenden Element die Kammer (92; 138) mit der Kammer (94; 132) oder mit der Kammer (96; 134) oder mit der Kammer (98; 136) verbindet.

**Claims**

1. An actuation device for displacing a movable component such as a flap (46, 82) in a heating and ventilating or air conditioning system for motor vehicles, comprising a single action jack (38) the piston rod (40) of which is connected to the movable component by means (58, 62, 84) for transmitting movement, a fluid distributor (10, 70) connected to a supply orifice (36) of the jack (38), to a source of pressurized fluid (112) and to an exhaust outlet (114), and a control means (18, 116) of the distributor to supply the jack (38) with pressurized fluid, to connect it to the exhaust outlet, or to isolate it from the source of fluid and from the exhaust outlet, which distributor (10, 70) and which control means (18, 116) are mounted on the instrument panel of the motor vehicle, and the distributor comprises a movable element (14, 74) connected to the movable component (46, 82) by means for transmitting movement in a manner which follows the displacement of the movable component, characterized in that the jack (38) is also mounted on the instrument panel or in the immediate vicinity of the latter, and in that the distributor (10, 70), the jack (38) and the control means (18, 116) form a compact assembly in which the length of the fluid connection (64, 102) between the distributor and the jack is reduced to the minimum and is fixed, and the piston rod (40) of the jack and the movable element (14, 74) of the distributor are connected to the movable component (46, 82) by the same means (58, 60, 62, 84) for transmitting movement.

2. A device according to Claim 1, characterized in that the distributor (10) comprises another movable element (12) fixed to the control means (18) so as to be displaceable by the latter relative to the said first movable element (14) which is connected to the jack (38) by the aforementioned fluid connection (64).

3. A device according to Claim 2, characterized in that the other movable element (12) of the distributor (10) is connected to the source of pressurized fluid and to the exhaust outlet.

4. A device according to Claim 1, characterized in that the distributor (70) comprises a fixed element (72, 124) which cooperates with the aforementioned movable element (74) and is connected to the supply orifice (36) of the jack by the said fixed fluid connection (102).

5. A device according to Claim 4, characaterized in that the fixed element (72, 124) of the distributor is connected to the source of fluid (112) and to the exhaust outlet (114) by a supplementary distributor (110) which is operated by a control means (116).

6. A device according to Claim 4 or Claim 5, characterized in that the fluid connections between the fixed element (72, 124) of the distributor and the source of pressurized fluid (112) and the exhaust outlet (114) are fixed.

7. A device according to any one of Claims 4 to 6, characterized in that the fixed element (72, 124) and the movable element (74) of the distributor determine chambers (92, 94, 96, 98; 132, 134, 136, 138) between them, one of which (92, 138) is permanently connected to the supply orifice (36) of the jack, and the others of which are adapted to be connected to the source of fluid (112), to the exhaust outlet (114), and to be isolated from them, the movable element (74) of the distributor comprising a fluid channel (118) one end of which opens into the chamber (92) connected to the jack and the other end of which opens into one of the other chambers depending on the position of the movable component.

8. A device according to Claim 7, characterized in that the chamber (92) which is permanently connected to the supply orifice (36) of the jack is rectilinear and extends over the entire length of the facing (86) of the fixed element (72).

9. A device according to Claim 8, characterized in that the other chambers (94, 96, 98) comprise a chamber (94) which is next to the chamber (92) and extends over only part of the length of the facing (86), and two other, substantially L-shaped chambers (96, 98), these two L-shapes being nested in one another and over the corner of chamber (94) in such a way that the smaller arms of these L-shapes extend up to the chamber (92) and are separated from the latter by a rib (88) in the facing (86).

10. A device according to Claim 7, characterized in that the chamber (138) which is permanently connected to the supply orifice (36) of the jack is a continuous annular chamber defined between two concentric circular ribs (128) of a facing (126) of the fixed element (124).

11. A device according to Claim 10, characterized in that the other chambers (132, 134, 136) are defined by two concentric circular ribs (128) and are separated from one another by a radial rib (130).

12. A device according to any one of Claims 7 to 11, characterized in that the movable element (74) of the distributor comprises a groove (118; 148) formed straddling a rib (88, 128) of the fixed element (72; 124), which rib separates the chamber (92; 138) permanently connected to the supply orifice (36) of the jack from the other chambers (94, 96, 98; 132, 134, 136), in such a way that, depending on the position of the movable element relative to the fixed element, the groove (118; 148) connects the chamber (92; 138) with chamber (94; 132), or with chamber (96; 134), or with chamber (98; 136).

FIG.1

EP 0 229 545 B1

FIG. 2

EP 0 229 545 B1

FIG. 3

FIG. 4

FIG. 5